# EUROPEAN PATENT SPECIFICATION

(11) **EP 1 830 654 B1**
(45) Date of publication and mention of the grant of the patent: **22.10.2008**
(21) Application number: 05816298.3
(22) Date of filing: 07.12.2005
(51) Int. Cl.: A21D 13/00, A21D 8/00, A23L 1/01

(54) **MICROWAVEABLE FILLED FROZEN FOODSTUFF**
IN DER MIKROWELLE ERHITZBARES, GEFÜLLTES UND TIEFGEFRORENES NAHRUNGSMITTELPRODUKT
PRODUIT ALIMENTAIRE CONGELÉ FOURRÉ SUSCEPTIBLE D'ÊTRE CHAUFFÉ AU FOUR MICRO-ONDES

(30) Priority: 07.12.2004 EP 04078317
(43) Date of publication of application: 12.09.2007
(73) Proprietor: CSM Nederland B.V., 1112 XE Diemen (NL)
(72) Inventor: WÄPPLING-RAAHOLT, Birgitta, S-431 34 Mölndal (SE); MORET, Peter, NL-4421 ML Kapelle (NL)
(74) Representative: Swinkels, Bart Willem
(86) International application number: PCT/NL2005/050066
(87) International publication number: WO 2006/062408

(56) References cited:
- US-A- 4 400 404
- US-A- 4 693 899
- US-A- 5 281 433
- US-A1- 2002 136 797

## Description

### TECHNICAL FIELD OF THE INVENTION

The present invention is concerned with a frozen baked foodstuff that can suitably be prepared for consumption by microwave heating, said foodstuff comprising a filling and a flour based casing that fully envelops the filling.

The invention also relates to a method of preparing a ready-to-eat foodstuff comprising subjecting the aforementioned frozen baked foodstuff to microwave heating and to a process of preparing said frozen baked foodstuff.

### BACKGROUND OF THE INVENTION

It has become commonplace for consumers in industrialised countries to have microwave ovens at their disposal for home cooking. Microwave cooking is remarkably quick and convenient. Accordingly, both consumers and industry seek to use microwave ovens for everything from cooking vegetables and meats to reheating previously prepared foodstuffs etc. However, it has been well-established that the eating characteristics of certain microwave heated foodstuffs are inferior to those of conventionally prepared foodstuffs. This is particularly true for the category of foodstuffs that are the subject of the present invention, i.e. frozen baked foodstuffs that comprise a filling and a flour based casing that fully envelops the filling, hereinafter referred to as filled bakery products.

Filled bakery products that comprise a savoury or sweet filling that is entirely encased in flour based outside layer have been known for ages. The popularity of such foodstuffs can be attributed largely to the seemingly unlimited variety of combinations that can be prepared and the very desirable complementary eating characteristics of the filling and the flour based casing. These desirable attributes are readily appreciated when the product is consumed shortly after it has been freshly prepared. Under these conditions, the individual components of the product are fresh and any time-dependent processes which could lead to an undesirable product (e.g. staling of the flour based casing or its degradation in the presence of liquid from the filling) are of little concern.

In this age of consumer convenience, however, it has become necessary to address the fact that a wide segment of the population has little time for, or interest in, actually preparing fresh food items of this type. In addition, consumers desire such products at times and in places where fresh ingredients and appropriate cooking utensils are unavailable. As a result, attempts have been made to provide fully-prepared filled bakery products that can be stored for longer periods of time and that can be quickly and easily prepared for consumption. Because such products are preassembled, it is necessary that they be formulated and/or processed in such a way that they are resistant to spoilage as well as to textural and organoleptic changes up till the moment of consumption. An effective way to achieve this is to freeze the filled bakery product immediately after its manufacture and to ship and store it in frozen form. Such frozen products require thawing and optionally further heating of the product prior to consumption. For reasons of convenience such thawing and heating is preferably done in a microwave oven.

Microwaveable frozen filled bakery products have been on the market for some time. However, so far, these products have not met with a high degree of success because usually they fail to exhibit the desirable eating characteristics of a freshly prepared filled bakery product. A major problem associated with microwave heating of frozen filled bakery products is related to the non-uniform temperature distribution within the product after microwave heating. Frequently, microwave heating yields a product with a very uneven heat distribution as evidenced by the presence of frozen parts and/or parts that are overheated. This problem is intrinsic to these products and cannot be resolved solely by adjusting the conditions of microwave heating. The problem of uneven heat distribution in microwave heated frozen products is, amongst other things, the result of the fact that ice heats up much more slowly in a microwave oven than does water. Thus, as soon as parts of the product have defrosted as a result of microwave heating, further microwave heating will quickly drive up the temperature of the water whilst the remaining frozen parts of the product are slowly defrosting.

The problem of non-uniform heating of frozen filled bakery products in the microwave has been recognised before and solutions have been proposed that involve the reformulation of product components, notably the filling, so as to decrease the differences in heating up rates that are observed during microwave heating. However, the quality of these reformulated products is often found to be unsatisfactory.

EP-A 0 497 553 discloses sandwiches which are ready to be eaten after being heated in a microwave oven and which contain at least two different product or filler layers which heat at dissimilar rates in a microwave oven with at least one of the layers containing at least one irregularity in the form of a hole or indentation or a protuberance which allows the two or more layers to be simultaneously heated to desired heating temperature in a microwave oven.

US-A 2002/0136797 describes a process for making a ready-to-eat filled bagel dough product, comprising the steps of: (a) mixing and kneading flour, water, salt and yeast to form a bagel dough; (b) measuring an amount of a filler material; (c) enclosing said amount of filler material within bagel dough produced in step (a) to produce a filled bagel dough product; (d) proofing the product of step (c) to activate said yeast to raise said bagel dough through fermentation; (g) chilling or freezing the product of step (d); (h) steaming the product of step (g) to fully cook the dough; (i) optionally chilling or freezing the product of step (h); (j) freezing the product of step (i); and (k) packing the product; and (l) heating the product in a microwave oven prior to consumption; wherein the filled bagel dough product has a fresh taste. Frozen filled bagel products are furthermore described in the following patent publications: US 5,641,527; GB-A 2 325 843; US-A 2002/0187225; US-A 2002/0122858 and US 6,444,245.It is an objective of the present invention to provide frozen filled bakery products other than frozen filled bagels that can suitably be heated in a microwave oven straight from the freezer to produce a ready-to-eat product with eating characteristics that are similar to that of a freshly prepared product.

### SUMMARY OF THE INVENTION

The inventors have found that this objective can be realised without reformulation by adapting the shape of the filled bakery product. To be more precise, the inventors have found that the temperature distribution within the product after microwave heating is largely determined by the shape of the filling. It was found that if said filling is of a toroidal shape, the entire filling as well as the outer casing will heat up at comparable rates. Furthermore, it was observed that temperature differences within such a microwave heated filled product disappear very rapidly. Thus, if a frozen baked product comprising a filling of toroidal shape is heated in a microwave oven, an essentially uniform temperature distribution is achieved throughout the product within a few minutes after the microwave heating is discontinued.

A frozen filled bakery product that contains a filling of toroidal shape is known from US 4,400,404. This US patent describes a method of preparing a pizza comprising: shaping a dough into a rectangular shape; placing the pizza ingredients along the length of one side of the rectangularly shaped dough; folding the rectangularly shaped dough on its smaller edges over the ingredients to bring the longer edges of the dough and the folded edges into abutment; crimping the abutting edges of the dough together to from an elongated rectangularly shaped, filled dough product; bringing the smaller sealed edges of said elongated dough product into an end to end relationship and joining the smaller edges together to form the dough product into a toroidal shape. The toroidally shaped dough products disclosed in the US patent combine a relatively thin ring with a relatively large central aperture.

### DETAILED DESCRIPTION OF THE INVENTION

One aspect of the invention relates to a frozen baked foodstuff other than a frozen baked bagel, which foodstuff can be prepared for consumption by microwave heating, said foodstuff comprising a toroidal shaped filling and a flour based casing that fully envelops said toroidal shaped filling, wherein the ratio between the internal diameter and the external diameter of the toroidal shaped filling is within range of 1:3 and 1:1.3 and wherein, in case the foodstuff contains a central aperture, the ratio between the internal and external diameter of the filled foodstuff does not exceed 1:1.8. The present invention encompasses frozen filled foodstuffs that prior to consumption are to be heated to ambient temperature as well as those that are ordinarily consumed hot.

The term "toroidal shape" as used in here refers to a ring-like shape. The toroidal shape may be slightly ellipsoid, provided the ratio between the minimum and maximum diameter (internal as well as external) does not exceed 1:2. Preferably, said ratio does not exceed 1:1.5, more preferably it does not exceed 1:1.2. The cross section of the toroidal shape in a plane that coincides with its rotational axis of symmetry yields two segments that may suitably take the form of a circle, an ellipsoid, a hexagon or any other form, provided the ratio between the minimum and maximum diameter of said cross section does not exceed 1:3. Preferably, said ratio does not exceed 1:2.

The terms "diameter" as used throughout this document in relation to objects that have a toroidal or disk-like shape, unless indicated otherwise, refers to a diameter of such an object within the plane that is perpendicular to the rotational axis of the object. The term "internal diameter" refers to diameter of the central hole of the ring. The term "external diameter" refers to the outside diameter of the ring. The term "diameter", as used in here, unless indicated otherwise, refers to the average diameter.

It should be understood that the present invention encompasses foodstuffs in which the filling does not form a continuous uninterrupted torus. However, in accordance with the present invention, at least 80% of the circumference should consist of filling. Preferably, at least 90% of said circumference consists of filling, more preferably at least 95% and most preferably the filling forms an entirely closed torus.

It is an essential aspect of the present invention that the frozen foodstuff was baked prior to freezing. Usually the frozen foodstuff will have been baked using a conventional oven (i.e. not a microwave oven) so as to ensure that the outer casing will exhibit the eating characteristics that are typical of a freshly prepared product. The product may have been only partially baked before freezing and the microwave heating step may be utilised to obtain a fully baked product. This may require the use of special devices to ensure that sufficient heat is generated on the product surface to generate a crispy crust that is typical of conventionally baked products. Preferably, however, the frozen foodstuff is fully baked, meaning that the sole purpose of microwave heating is to reheat, i.e. to increase the temperature of, the product.

It should be understood that the present invention also encompasses an embodiment wherein the frozen foodstuff is prepared by first baking the casing, followed by introducing the filling into the hollow baked casing, preferably by injection, and by subsequently freezing the filled baked product.

The present invention does not encompass frozen baked bagels. Filled bagels are traditionally prepared by first boiling a filled yeast dough to close the pore of the dough to form a skin, followed by baking in a hot oven to turn the crust golden brown. Bagels are furthermore characterised by a very hard outer crust and a soft inner crumb. The hardness of bagels and other baked products may suitably be analysed by the so called puncture test. This test employs an Instron ® 5542 Universal Testing Instrument comprising a vertically mounted cylindrical, flat end test probe (probe diameter 3 mm). During the test, the test probe is moved vertically to penetrate the crust of an underlying sample at a perpendicular angle and a crosshead speed of 50 mm/min. Penetration displacement is limited to 70% of strain and the force needed to penetrate the sample is recorded as a function of the travel distance of the probe. Typically, this test produces a curve with a clear maximum. The hardness of a sample crust equals the force (load) observed at the first maximum in the aforementioned curve. This hardness value equals the force needed to puncture the crust. The hardness measurement is performed on samples 15 minutes after they have been thawed in a microwave, coming straight out of a freezer.

Typically, bagels exhibit a hardness of more than 2 N. The present frozen baked foodstuff preferably has a hardness of not more than 2 N. More preferably, the present foodstuff exhibits a hardness that does not exceed 1.5 N, even more preferably it does not exceed 1.2 N and most preferably it does not exceed 1.0 N.

In comparison to other baked product, bagels are also relatively tough. Typically, bagels have a toughness of more than 600 mJ. Toughness as referred to in this document is determined by means of an Instron® 5542 Universal Testing Instrument comprising a vertically mounted stainless steel plate, using the software Instron series IX. The bottom of the plate is V-shaped, 76 mm long and 5 mm thick. The toughness measurement is conducted by moving the plate vertically downwards into a crust at a perpendicular angle. At the beginning of the measurement, the edge of the plate is located just in contact with the top of the sample. The plate is moving at a cross head speed of 120 mm/min to a limited strain of 91.67%. As the plate moves down, the force needed to move the plate at the indicated speed is recorded continuously as function of travel distance. The area under the curve so obtained is calculated and is indicative of the toughness of the sample. The toughness measurement is conducted on samples 40 minutes after they have been thawed in a microwave, coming straight out of a freezer.

After microwave thawing, the present foodstuff typically has a toughness of not more than 600 mJ. Preferably, after microwave reheating, the toughness of the present frozen baked foodstuff does not exceed 500 mJ, even more preferably it does not exceed 400 mJ.

According to a preferred embodiment, the frozen baked foodstuff of the present invention has not been subjected to boiling or steaming. Naturally, this does not exclude the occasional use of steam injections during the baking of the present foodstuff. In accordance with a preferred embodiment the present foodstuff comprises a crust that is softer than a bagel crust.

The flour based casing of the present foodstuff will typically contain at least 30% flour by weight of dry matter. Preferably, the casing contains between 40 and 95% flour by weight of dry matter. In addition to flour, the casing may contain other food ingredients such as fat, water, emulsifiers, yeast, eggs, sugar, salt and/or enzymes. The casing of the present foodstuff may suitably be derived from dough or batter. Preferably the casing is derived from dough. The present casing may suitably consist of bread or pastry. The benefits of the present invention are particularly evident in foodstuffs that comprise a casing consisting of bread (e.g. softbread).

The advantages of the present invention can be realised with a wide variety of fillings. Examples of filling ingredients that may suitably be employed in the present foodstuff include cheese, meat, fruit, chocolate, sauce, custard as well as combinations of these ingredients. Preferably, the filling contains at least 5 wt.% of one or more of these ingredients, more preferably at least 20 wt.% and most preferably at least 50 wt.% of these ingredients.

In order to ensure that microwave heating will result in uniform heat distribution throughout the toroidal shaped filling it is preferred that said filling has a homogeneous composition. Thus, if the filling is composed of different ingredients, such ingredients are preferably homogeneously distributed throughout the filling, e.g. not in layers.

The benefits of the present invention are particularly pronounced in case the toroidal shape of the filling exhibits a relatively small central aperture in relation to its external diameter. Such products offer the advantage that they are not fragile and that they can suitably be consumed as a snack. Thus, in a preferred embodiment, the ratio between the internal diameter and the external diameter of the toroidal shaped filling does not exceed 1:1.4, more preferably it does not exceed 1:1.5, even more preferably it does not exceed 1:1.6 and most preferably it does not exceed 1:1.7. Also, the central aperture in the filling should not be chosen too small as this may lead to an uneven heat distribution during microwave heating. Preferably, the ratio between the internal diameter and the external diameter is at least 1:2.5, more preferably at least 1:2.3 and most preferably at least 1:2.1.

In case the present foodstuff contains a central aperture, i.e. if in addition to the filling also the casing contains a coinciding aperture, the ratio between the internal and external diameter of the filled product does not exceed 1:1.8, preferably it does not exceed 1:2, more preferably it does not exceed 1:2.5, most preferably it does not exceed 1:3. It is noted that if the filled product does not contain a central aperture, the effective ratio between the internal and external diameter is 0, i.e. below the aforementioned minimum ratios.

For reasons of convenience and also to minimise differences in heating rates, it is preferred that the ratio between the height of the toroidal shaped filling and the external diameter of the same filling is at least 1:10, more preferably at least 1:9 and most preferably at least 1:8. Generally, said ratio does not exceed 1:2, more preferably it does not exceed 1:4, most preferably it does not exceed 1:5.

Typically, the present foodstuff will have an external diameter that does not exceed 20 cm. Preferably, said external diameter does not exceed 15 cm, more preferably it does not exceed 12 cm and most preferably it does not exceed 10 cm. The benefits of the present invention are particularly appreciated in foodstuffs that exhibit an external diameter of at least 4 cm, particularly at least 5 cm, most particularly at least 6 cm.

The casing of the present foodstuff typically exhibits an average layer thickness within the range of 0.3-3 cm. Preferably, the layer thickness of the casing is at least 0.5 cm, more preferably it is at least 1 cm. Also, preferably, the layer thickness of the casing does not exceed 2.5 cm, more preferably it does not exceed 2.0 cm. In order to ensure very uniform heating of the toroidal shaped filling, the difference between the external and internal diameter of said filling should preferably not exceed 8 cm. More preferably said difference does not exceed 6 cm, most preferably it does not exceed 5 cm. The benefits of the invention are particularly pronounced if the aforementioned difference between external and internal diameter exceeds 1 cm, particularly 1.5 cm, most particularly 3 cm.

The casing of the present foodstuff may take the shape of, for instance, a disc or a hollow torus. A hollow torus offers the advantage that the filling need not be bakestable as the toroidal shape of the filling will be maintained during baking because the casing acts as a mould. A disc-like shape of the casing is suitable if the filling is bakestable and/or if the central aperture in the filling is filled with another ingredient or component. Preferably, if the casing is shaped in the form of a disc the axial cross section of said disc exhibits rounded edges at the extremes.

Another aspect of the invention relates to a packaged foodstuff comprising a frozen baked foodstuff other than a frozen baked bagel, which frozen baked foodstuff can be prepared for consumption by microwave heating, said foodstuff comprising a toroidal shaped filling and a flour based casing that fully envelops said toroidal shaped filling, wherein the ratio between the internal diameter and the external diameter of the toroidal shaped filling is within the range of 1:3 and 1: 1.3 and a packaging material containing said foodstuff, wherein instructions, particularly instructions in print, are provided on the packaging material indicating that the product may suitably be heated by means of microwaves. Typically, these instructions will include references to the heating times to be applied as a function of the microwave heating power.

Yet another aspect of the invention is concerned with a method of preparing a ready-to-eat foodstuff comprising subjecting a frozen baked foodstuff other than a frozen baked bagel as defined in the previous paragraph to microwave heating to completely thaw the foodstuff.

The present method may employ other forms of heating in addition to microwave heating. In a very preferred embodiment, however, the method does not employ any form of heating other than microwave heating. In accordance with the present invention, the method may be used to simply thaw the frozen foodstuff so as to allow it to be consumed in non-frozen form, or it may be employed to yield a warm or even hot product. Preferably, in the present method, microwave heating is discontinued when the foodstuff has been uniformally heated to a temperature within the range of 10-90°C. Preferably, the foodstuff is uniformally heated to a temperature of a least 40 °C, more preferably of at least 50°C.

In a particularly preferred embodiment of the invention, the present method comprises subjecting the present filled bakery product in deep frozen form to the microwave heating. Typically, the average temperature of the deep frozen product is less than -10 °C when microwave heating is started, preferably said temperature is less than -12 °C, more preferably it is less than -15 °C.

A further aspect of the invention is concerned with a process of preparing a frozen baked foodstuff, especially a frozen baked foodstuff other than a frozen baked bagel, said process comprising:
a. horizontally positioning a first sheet of dough;
b. placing a ring of solid edible material on top of the first sheet of dough;
c. horizontally positioning a second sheet of dough on top of the ring of solid edible material and the first sheet of dough in such a way that said ring of edible material is completely enveloped by dough;
d. crimping the abutting parts of the first dough sheet and the second dough sheet together around the outer edge of the ring of solid edible material;
e. if excess dough material remains outside the ring where the first dough sheet and the second dough sheet have been crimped together, removing said excess dough material;
f. baking the product so obtained without prior boiling or steaming; and
g. freezing the baked product.

The present process is perfectly suited for industrial production of the present frozen baked foodstuff. The ring of solid edible material may have been preshaped into a ring form before it is deposited on top of the first sheet of dough, or it may be laid out onto said sheet in the form of a ring (e.g. by extrusion or pouring). In case the edible material is fluid at ambient temperature, the present method encompasses the use of edible material that has been solidified by cooling prior to placement onto the fist sheet of dough. It is noted that the crimping of the abutting parts and the removal of excess dough may be achieved in a single step, e.g. by punching.

In one particularly preferred embodiment, between steps c. and f. apertures are created in the first and second dough sheet that coincide with the opening in the toroidal shaped filling and wherein the edge of the aperture in the first dough sheet and the edge of the aperture in the second dough sheet are crimped together. Thus, a filled bakery product is obtained wherein the toroidal shaped filling is entirely engaged by the external flour based casing which forms a hollow torus.

In an alternative preferred embodiment, between steps a. and c. one or more other components are deposited onto the first sheet of dough in such a way that, before the second sheet of dough is positioned, these one or more components fill up most of central aperture within the ring of solid edible material.

The baking step f. preferably does not employ microwave heating. In a preferred embodiment said heating step employs a hot air oven or convection oven.

The invention is further illustrated by means of the following examples.

### EXAMPLES

### Example 1

A frozen baked softbread product filled with apple was prepared as follows:
Dough recipe:

| | Bakers% |
|---|---|
| Flour | 100 |
| Water | 52 |
| Yeast | 4 |
| Breadmix^{#} | 8.5 |
| Fat | 10 |
| Improver^{$} | 4 |

| | |
|---|---|
| ^{#} ingredients: skimmed milk powder, salt, sugar, pectin, instant Cleargel^{™} and SSL ^{$} ingredients: Volufresh^{™} starch, maize starch hydrocolloid and methyl cellulose | |

Filling composition:

| | |
|---|---|
| Apple | 84.2% |
| Sugar | 11.7% |
| Starch | 3.7% |
| Hydrocolloid | 0.4% |

The dough ingredients were mixed together and kneaded into a dough. The dough was rolled into a sheet of 3 mm thickness. The filling was poured onto the dough sheet in the form of rings with an internal diameter of about 34 mm and an external diameter of about 64 mm. Next, another dough sheet of the same thickness was put down on top of the filling and the bottom sheet. The upper dough sheet was manually pressed onto the bottom dough sheet so as to crimp together the dough sheets around the rings of filling. The excess dough material outside the rings of joined dough material was removed by cutting (resulting in a disc with an external diameter of about 88 mm). Subsequently, the dough sheets were carefully pressed inwards towards each other into the cavity formed by the central aperture of the filling. The abutting dough sheets in the central cavity were moulded together manually, after which a circular hole of 20 mm diameter was punched through the area where the two dough sheets had been moulded together. Next, little holes were punched in the top dough layer to allow for steam to escape from the filling and to minimise the steam hole after baking. Finally, the resulting dough product was proofed at 32°C for 75 minutes at a relative humidity 80%.

The filled dough product so obtained was baked in an oven that had been preheated to 230°C. The product was baked at 210°C for 13 minutes, using 25 seconds of steam injection at the beginning of the baking process. The fully baked product thus obtained was frozen to -30°C in 60 minutes.

After storage at -30°C for 4 weeks, the frozen product was reheated for 50 seconds in an institutional microwave oven (Panasonic NE-1670, at 800 W microwave power level). The temperature of different parts of the product (filling and casing) was monitored using fibreoptic probes (Luxtron modelnumber 790). Filling probes 1 and 2 were inserted into the centre of the filling, the distance between the probes corresponding to a radial angle of 22.5°. Casing probes 3 and 4 were inserted halfway into the casing layer. The two casing probes were inserted into the bottom of the casing along a radial line at a distance from each other that equals 50% of the difference between the external and internal diameter of the casing and at the same distance from the vertical line that can be drawn through the centre of the filling.

The temperatures measured are represented in the following table:

| | **Time lapsed since discontinuation of microwave heating** | | |
|---|---|---|---|
| | **0 seconds** | **1 minute** | **2 minutes** |
| Filling probe 1 | 30°C | 42°C | 45°C |
| Filling probe 2 | 30°C | 34°C | 39°C |
| Casing probe 1 | 58°C | 38°C | 35°C |
| Casing probe 2 | 58°C | 34°C | 35°C |

From the above it can be concluded that the frozen product can suitably be reheated in a microwave oven to produce an evenly heated baked product that is suitable for immediate consumption.

### Comparative example A

Example 1 was repeated with the exception that the same amount of apple filling was deposited onto the bottom dough sheet in the form of an oval disc of about 50 by 90 mm. Like in Example 1, another dough sheet was put down on top of the filling and the bottom sheet and the product was further processed as in Example 1, except that there no central aperture was created. Furthermore, this time the product was heated for 40 seconds at 800 W.

The temperature measurements within the product yielded the following results:

| | **Time lapsed since discontinuation of microwave heating** | | |
|---|---|---|---|
| | **0 seconds** | **1 minute** | **2 minutes** |
| Filling probe 1 | -4°C | -1°C | 4°C |
| Filling probe 2 | -4°C | 12°C | 14°C |
| Casing probe 1 | 56°C | 52°C | 48°C |
| Casing probe 2 | 57°C | 49°C | 43°C |

| | | | |
|---|---|---|---|
| Filling probes 1 and 2 were inserted into the filling at half the height of the filling. Filling probe 1 was positioned in the centre of symmetry of the filling. Filling probe 2 was positioned at a distance of 10 mm from the first probe along the line that spans the largest diameter of the product The two casing probes were inserted into the bottom of the casing along a line that spans the largest diameter of the product and at a distance from each other that equals 50% of said largest diameter at the same distance from the vertical line that can be drawn through the centre of symmetry of the product. | | | |

Clearly, microwave heating of this frozen product yielded a very uneven temperature distribution, i.e. a hot casing and a cold filling. Additional microwave heating will eventually produce a hot filling, but will at the same time lead to drying out of the casing. Also, the temperature distribution within the filling will remain uneven, even if additional microwave heating is applied.

### Example 2

A frozen baked puff pastry product filled with chocolate was prepared as follows:
Dough recipe:

| | Bakers% |
|---|---|
| Flour | 100 |
| Water | 53 |
| Salt | 1 |
| Improver | 1 |
| Fat | 9.2 |
| Lamination fat | 40 |

The dough ingredients, with the exception of the lamination fat, were mixed together and kneaded into a dough. Next, the dough was laminated using the lamination fat. The laminated dough was rolled into a sheet of 2.5 mm thickness. Chocolate rings with an external diameter of about 67 mm and an internal diameter of about 35 mm were positioned onto the dough sheet. Next, another dough sheet with the same thickness was put down on top of the filling and the bottom sheet. The upper dough sheet was manually pressed onto the bottom dough sheet so as to crimp together the dough sheets around the chocolate rings. The excess dough material outside the rings of joined dough material was removed. Subsequently, the dough sheets were carefully pressed inwards towards each other into the cavity formed by the central aperture of chocolate rings. The abutting dough sheets in the central cavity were moulded together manually, after which a circular hole was punched through the area where the two dough sheets had been moulded together. The resulting product exhibited an external diameter of 101 mm and an internal diameter of 11 mm.

The filled dough product so obtained was baked in an oven that had been preheated to 255°C. The product was baked at 195°C for 28 minutes. The fully baked product thus obtained was frozen to -30°C in 60 minutes.

After storage at -30°C for 4 weeks, the frozen product was reheated for 55 seconds in the same microwave oven and heating conditions as describe in Example 1. The temperature of different parts of the product (filling and casing) was monitored using the same probes as described in Example 1. The temperatures measured are represented in the following table:

| | **Time lapsed since discontinuation of microwave heating** | | |
|---|---|---|---|
| | **0 seconds** | **1 minute** | **2 minutes** |
| Filling probe 1 | 10°C | 18°C | 22°C |
| Filling probe 2 | 10°C | 22°C | 26°C |
| Casing probe 1 | 15°C | 27°C | 32°C |
| Casing probe 2 | 9°C | 23°C | 28°C |

It can be concluded from the above that the frozen product can suitably be reheated in a microwave oven to produce an evenly heated baked product that is suitable for immediate consumption.

### Comparative example B

Example 2 was repeated with the exception that instead of a chocolate ring a chocolate disc was put onto the bottom dough sheet which had the same weight and height as the chocolate ring. Like in Example 2, another dough sheet was put down on top of the filling and the bottom sheet and the product was further processed as in Example 1, except that there no central aperture was created. Furthermore, this time the product was heated for 60 seconds at 800 W.

The temperature measurements within the product yielded the following results (filling probe was inserted into the centre of the filling, casing probe was inserted halfway into the bottom of the casing):

| | **Time lapsed since discontinuation of microwave heating** | | |
|---|---|---|---|
| | **0 seconds** | **1 minute** | **2 minutes** |
| Filling probe | -17°C | -12°C | 0°C |
| Casing probe | 52°C | 46°C | 39°C |

Clearly, microwave heating of this frozen product yielded a very uneven temperature distribution, i.e. a hot casing and a very cold filling. Additional microwave heating will eventually produce a hot filling, but will at the same time lead to drying out of the casing.

## Claims

1. A frozen baked foodstuff other than a frozen baked bagel, which frozen baked foodstuff can be prepared for consumption by microwave heating, said foodstuff comprising a toroidal shaped filling and a flour based casing that fully envelops said toroidal shaped filling, wherein the ratio between the internal diameter and the external diameter of the toroidal shaped filling is within the range of 1:3 and 1:1.3 and wherein, in case the foodstuff contains a central aperture, the ratio between the internal and extrernal diameter of the filled foodstuff does not exceed 1:1.8.

2. The foodstuff according to claim 1, wherein the frozen foodstuff is fully baked.

3. The foodstuff according to claim 1 or 2, wherein the casing contains between 40 and 95% flour by weight of dry matter.

4. The foodstuff according to any one of the preceding claims, wherein the filling contains at least 5 wt.% of a food material selected from the group consisting of cheese, meat, fruit, chocolate, sauce, custard and combinations thereof.

5. The foodstuff according to any one of the preceding claims, wherein, if the foodstuff contains a central aperture, the ratio between the internal and the external diameter of the filled product does not exceed 1:2.

6. The foodstuff according to any one of the preceding claims, wherein the ratio between the internal diameter and the external diameter of the toroidal shaped filling is within range of 1:2.5 and 1:1.5.

7. The foodstuff according to any one of the preceding claims, wherein the ratio between the height of the toroidal shaped filling and the external diameter of the same filling is within the range of 1:10 and 1:2.

8. The foodstuff according to any one of the preceding claims, wherein the external diameter of the foodstuff is within the range of 5-20 cm.

9. The foodstuff according to any one of the preceding claims, wherein the casing has an average layer thickness in the range of 0.3-3 cm

10. The foodstuff according to any one of the preceding claims, wherein the casing consists of bread or pastry.

11. A packaged foodstuff comprising a frozen baked foodstuff other than a frozen baked bagel, which frozen baked foodstuff can be prepared for consumption by microwave heating, said foodstuff comprising a toroidal shaped filling and a flour based casing that fully envelops said toroidal shaped filling, wherein the ratio between the internal diameter and the external diameter of the toroidal shaped filling is within the range of 1:3 and 1:1.3 and a packaging material containing said foodstuff, wherein instructions are provided on the packaging material indicating that the product may suitably be heated by means of microwaves.

12. A method of preparing a ready-to-eat foodstuff comprising subjecting a frozen baked foodstuff as defined in claim 11 to microwave heating to completely thaw the foodstuff.

13. A process of preparing a frozen baked foodstuff, said process comprising:
a. horizontally positioning a first sheet of dough;
b. placing a ring of solid edible material on top of the first sheet of dough;
c. horizontally positioning a second sheet of dough on top of the ring of solid edible material and the first sheet of dough in such a way that said ring of edible material is completely enveloped by dough;
d. crimping the abutting parts of the first dough sheet and the second dough sheet together around the outer edge of the ring of solid edible material;
e. if excess dough material remains outside the ring where the first dough sheet and the second dough sheet have been crimped together, removing said excess dough material;
f. baking the dough product so obtained without prior boiling or steaming; and
g. freezing the baked product.

## Patentansprüche

1. Tiefgefrorenes gebackenes Nahrungsmittelprodukt, welches sich von einem tiefgefrorenem gebackenem Bagel unterscheidet, wobei das tiefgefrorene gebackene Nahrungsmittelprodukt zum Verzehr durch Erhitzen in der Mikrowelle zubereitet werden kann, wobei das Nahrungsmittelprodukt eine ringförmige Füllung und eine auf Mehl basierende Hülle umfasst, welche die ringförmige Füllung vollständig umhüllt, wobei das Verhältnis zwischen dem inneren Durchmesser und dem äußeren Durchmesser der ringförmigen Füllung im Bereich von 1:3 und 1:1,3 liegt und wobei in dem Fall, dass das Nahrungsmittelprodukt eine mittige Öffnung enthält, das Verhältnis zwischen dem inneren und dem äußeren Durchmesser des gefüllten Nahrungsmittelprodukts 1:1,8 nicht überschreitet.

2. Nahrungsmittelprodukt gemäß Anspruch 1, wobei das tiefgefrorene Nahrungsmittelprodukt vollständig gebacken ist.

3. Nahrungsmittelprodukt gemäß Anspruch 1 oder 2, wobei die Hülle zwischen 40 und 95 Gew.% Mehl, bezogen auf die Trockensubstanz enthält.

4. Nahrungsmittelprodukt gemäß einem der vorangehenden Ansprüche, wobei die Füllung mindestens 5 Gew.% eines Nahrungsmittels ausgewählt aus Käse, Fleisch, Frucht, Schokolade, Sauce, Eiercreme und Gemischen davon enthält.

5. Nahrungsmittelprodukt gemäß einem der vorangehenden Ansprüche, wobei, wenn das Nahrungsmittelprodukt eine mittige Öffnung enthält, das Verhältnis zwischen dem inneren und dem äußeren Durchmesser des gefüllten Produkts 1:2 nicht überschreitet.

6. Nahrungsmittelprodukt gemäß einem der vorangehenden Ansprüche, wobei das Verhältnis zwischen dem inneren Durchmesser und dem äußeren Durchmesser der ringförmigen Füllung im Bereich von 1:2,5 und 1:1,5 liegt.

7. Nahrungsmittelprodukt gemäß einem der vorangehenden Ansprüche, wobei das Verhältnis zwischen der Höhe der ringförmigen Füllung und dem äußeren Durchmessers der selben Füllung im Bereich von 1:10 und 1:2 liegt.

8. Nahrungsmittelprodukt gemäß einem der vorangehenden Ansprüche, wobei der äußere Durchmesser des Nahrungsmittelprodukts im Bereich von 5-20 cm liegt.

9. Nahrungsmittelprodukt gemäß einem der vorangehenden Ansprüche, wobei die Hülle eine durchschnittliche Schichtdicke im Bereich von 0,3-3 cm hat.

10. Nahrungsmittelprodukt gemäß einem der vorangehenden Ansprüche, wobei die Hülle aus Brot oder Feingepäck besteht.

11. Abgepacktes Nahrungsmittelprodukt, umfassend ein tiefgefrorenes gebackenes Nahrungsmittelprodukt, welches sich von einem tiefgefrorenem gebackenem Bagel unterscheidet, wobei das tiefgefrorene gebackene Nahrungsmittelprodukt zum Verzehr durch Erhitzen in der Mikrowelle zubereitet werden kann, wobei das Nahrungsmittelprodukt eine ringförmige Füllung und eine auf Mehl basierende Hülle umfasst, welche die ringförmige Füllung vollständig umhüllt, wobei das Verhältnis zwischen dem inneren Durchmesser und dem äußeren Durchmesser der ringförmigen Füllung im Bereich von 1:3 und 1:1,3 liegt, und ein das Nahrungsmittelprodukt enthaltendes Verpackungsmaterial, wobei auf dem Verpackungsmaterial Anweisungen vorhanden sind, welche angeben, dass das Produkt in geeigneter Weise durch Mikrowellen erhitzt werden kann.

12. Verfahren zur Herstellung eines verzehrfertigen Nahrungsmittelprodukts, umfassend das Erhitzen eines tiefgefrorenen gebackenen Nahrungsmittelprodukts gemäß Anspruch 11 durch Mikrowellen, um das Nahrungsmittelprodukt komplett aufzutauen.

13. Verfahren zur Herstellung eines tiefgefrorenen gebackenen Nahrungsmittelprodukts, wobei das Verfahren umfasst:
a) horizontales Positionieren einer ersten Teigschicht;
b) Platzieren eines Rings aus festem essbarem Material auf die erste Teigschicht;
c) horizontales Positionieren einer zweiten Teigschicht auf den Ring aus essbarem Material und der ersten Teigschicht, derart, dass der Ring aus festem essbarem Material vollständig mit Teig umhüllt ist;
d) Zusammenheften der aneinander angrenzenden Teile der ersten Teigschicht und der zweiten Teigschicht um der äußeren Rand des Rings aus festem essbarem Material;
e) falls überschüssiges Teigmaterial außerhalb des Rings, dort wo die erste Teigschicht und die zweite Teigschicht zusammengeheftet wurden, zurückbleibt, Entfernen des überschüssigen Teigmaterials;
f) Backen des so erhaltenen Teigprodukts ohne vorheriges Sieden oder Beschwaden; und
g) Einfrieren des gebackenen Produkts.

## Revendications

1. Produit alimentaire surgelé cuit autre qu'un *bagel* surgelé cuit, lequel produit peut être préparé pour la consommation par chauffage au micro-onde, ledit produit comprenant une garniture de forme toroïdale et une gaine à base de farine qui enveloppe complètement ladite garniture de forme toroïdale, où le rapport entre le diamètre interne et le diamètre externe de la garniture de forme toroïdale est dans la gamme 1 :3 et 1 :1,3, et où, dans le cas ou le produit alimentaire contient un orifice central, le rapport entre le diamètre interne et le diamètre externe du produit alimentaire fourré n'excède pas 1 :1,8.

2. Produit alimentaire selon la revendication 1, où le produit alimentaire surgelé est complètement cuit.

3. Produit alimentaire selon la revendication 1 ou 2, où la gaine contient entre 40 à 95% de farine par poids de substance sèche.

4. Produit alimentaire selon l'une quelconque des revendications précédentes, où la garniture contient au moins 5% en poids de matériau alimentaire choisi dans le groupe constitué de fromage, de viande, de fruit, de chocolat, de sauce, de crème prise et des combinaisons de ces derniers.

5. Produit alimentaire selon l'une quelconque des revendications précédentes, où, si la produit alimentaire contient un orifice central, le rapport entre le diamètre interne et le diamètre externe du produit fourré n'excède pas 1 :2.

6. Produit alimentaire selon l'une quelconque des revendications précédentes, où le rapport le rapport entre le diamètre interne et le diamètre externe de la garniture de forme toroïdale est dans la gamme de 1 :2,5 et 1 :1,5.

7. Produit alimentaire selon l'une quelconque des revendications précédentes, où le rapport entre la hauteur de la garniture de forme toroïdale et le diamètre externe de la même garniture est dans la gamme de 1 :10 et 1,2.

8. Produit alimentaire selon l'une quelconque des revendications précédentes, où le diamètre externe du produit est dans la gamme de 5-20cm.

9. Produit alimentaire selon l'une quelconque des revendications précédentes, où la gaine a une épaisseur moyenne dans la gamme de 0,3 à 3 cm.

10. Produit alimentaire selon l'une quelconque des revendications précédentes, où la gaine consiste en du pain ou de la pâte.

11. Produit alimentaire emballé comprenant un produit alimentaire surgelé cuit autre qu'un *bagel* surgelé cuit, lequel produit peut être préparé pour la consommation par chauffage au micro-onde, ledit produit comprenant une garniture de forme toroïdale et une gaine à base de farine qui enveloppe complètement ladite garniture de forme toroïdale, où le rapport entre le diamètre interne et le diamètre externe de la garniture de forme toroïdale est dans la gamme 1 :3 et 1 :1,3, et un matériau d'emballage contenant ledit produit alimentaire, où les instructions sont fournies sur le matériau d'emballage indiquant que le produit peut convenablement être chauffé au moyen d'un micro-onde.

12. Méthode de préparation d'un produit alimentaire prêt à être mangé comprenant le chauffage au micro-onde d'un produit alimentaire surgelé cuit comme défini dans la revendication 11, pour décongeler complètement le produit alimentaire.

13. Procédé de préparation d'un produit alimentaire surgelé cuit, ledit procédé comprenant :
a. le positionnement horizontal d'une première feuille de pâte ;
b. la mise en place d'un anneau de matériel comestible solide sur le dessus de la première feuille de pâte ;
c. le positionnement horizontal d'une seconde feuille de pâte sur le dessus de l'anneau de matériel comestible solide et de la première feuille de pâte de telle sorte que ledit anneau de matériel comestible solide soit complètement enveloppé par la pâte ;
d. repliement des parties contiguës de la première et de la deuxième feuille de pâte ensemble autour du bord extérieur de l'anneau de matériel comestible solide ;
e. si un excès de pâte reste en dehors de l'anneau où la première et la seconde feuille de pâte ont été repliées ensemble, le retrait dudit excès de pâte ;
f. cuisson du produit de pâte ainsi obtenu sans ébullition ou cuisson à la vapeur préalable ;
g. surgélation du produit cuit.
